# EUROPEAN PATENT APPLICATION

(11) **EP 4 671 075 A1**
(43) Date of publication of application: **31.12.2025**
(21) Application number: 24185361.3
(22) Date of filing: 28.06.2024
(51) Int. Cl.: B60W 60/00

(54) **A METHOD FOR EVALUATING A CANDIDATE AUTOMATED DRIVING FEATURE**

(71) Applicant: Zenseact AB, 417 56 Gothenburg (SE)
(72) Inventor: SANDBLOM, Fredrik, 431 66 Mölndal (SE); HAGVALL, Linus, 418 74 Göteborg (SE)
(74) Representative: Zacco Sweden AB

(57) **Abstract**

The present disclosure at least partly relates to a computer-implemented method (100) for evaluating a candidate automated driving (AD) feature for a vehicle during a defined driving scenario, while the vehicle operates under a supervised operation mode, wherein the driving scenario is defined at least by a specific route. The method (100) comprises: obtaining (5102) driving preferences associated with the driver, the driving preferences being indicative of a desired performance level of the vehicle during said driving scenario; obtaining (S104) an expected performance level of the candidate AD feature during said driving scenario, wherein the candidate AD feature is capable of operating on a higher autonomy level than the supervised operation mode; in response to the expected performance level meeting the desired performance level: activating (5106) the candidate AD feature under the supervised operation mode; and collecting (S108) evaluation data indicative of a performance of said candidate AD feature, while the vehicle is operated with the candidate AD feature under the supervised operation mode during the driving scenario.

## Description

### TECHNICAL FIELD

The herein disclosed technology relates to the field of automated driving. In particular, but not exclusively, the herein disclosed technology relates to methods and systems for evaluating a candidate automated driving feature for a vehicle.

### BACKGROUND

The rapid development of automated driving technologies has led to significant advancements in the automotive industry. Automated driving (AD) features, such as highway autopilot, traffic jam assist, and automated emergency maneuvering, are designed to enhance safety and convenience for drivers. However, the deployment of these features into the consumer market presents unique challenges, particularly in the collection of verification and validation (V&V) data.

Verification and validation are central components of the development for automated driving systems. Verification involves checking that the system meets design specifications and requirements, while validation ensures that the system performs as intended in real-world scenarios. The V&V process is essential for demonstrating the reliability and safety of new AD features before they can be deployed.

Traditional methods of V&V typically involve extensive in-house testing, and controlled test-driver programs. However, these methods may not adequately capture the wide range of real-world scenarios and edge cases that automated driving systems (ADS) may encounter. Consequently, there is need for alternative ways to collect V&V data in a more dynamic way.

One such approach is the concept of grey-launch and limited-launch, which refers to the controlled, limited release of a product to a specific subset of users or geographic areas, allowing for real-world data collection and feedback before a full-scale launch. These methods are particularly useful for collecting V&V data for automated driving features, as it provides valuable insights into the performance and reliability of these systems under a larger number of real-world scenarios. Grey launch and limited-launch can concern an in-context evaluation of a specific component or functionality, and is constructed such that the user is not exposed to unexpected vehicle functionality or behavior.

A common approach for enabling limited-launch of an AD feature is prompting the driver, e.g. through a user interface in the vehicle, to allow the activation of the AD feature while out driving. Another option is to simply determine a group of vehicles, or geographical areas for which the AD feature is to be activated, if it has proven to fulfill the relevant safety requirements. This is referred to as grey launch, in that the activation of the feature or functionality should be done without the user noticing any difference. However, the activation of the AD feature under test may change the driving characteristics of the vehicle (e.g. requiring the speed to be reduced, or limit certain maneuvers of the vehicle), and some users may experience this as an undesirable degradation of the vehicle's performance (sometimes referred to as "feature degradation"). Grey-launch or limited-launch may thus lead to reduced customer satisfaction. Moreover, if the driver is in control of when to allow the limited-launch, they may be inclined to not accept the activation of the AD feature under test, thus leading to reduced opportunities for collecting the V&V data. There is therefore need for new and improved solutions for the validation of new AD features.

### SUMMARY

The herein disclosed technology seeks to mitigate, alleviate or eliminate one or more of the above-identified deficiencies and disadvantages in the prior art to address various problems relating to the development of automated driving, AD, features. In this regard, the inventors propose a method for increasing the amount of verification and validation, V&V, data of a candidate automated driving, AD, feature that can be collected, with limited impact on driver satisfaction. The disclosed technology enables optimization both on individual driver level, as well as on a fleet level. The disclosed technology makes it possible to allow certain vehicles to drive with the candidate AD feature under a supervised (by the driver) operation mode, with limited degradation of performance and user experience. Various aspects and embodiments of the disclosed technology are defined below and in the accompanying independent and dependent claims.

According to a first aspect, there is provided a computer-implemented method for evaluating a candidate automated driving, AD, feature for a vehicle during a defined driving scenario, while the vehicle operates under a supervised operation mode. The driving scenario is defined at least by a specific route. The method comprises obtaining driving preferences associated with the driver. The driving preferences being indicative of a desired performance level of the vehicle during said driving scenario. The method further comprises obtaining an expected performance level of the candidate AD feature during said driving scenario. The candidate AD feature is capable of operating on a higher autonomy level than the supervised operation mode. The method further comprises, in response to the expected performance level meeting the desired performance level: activating the candidate AD feature under the supervised operation mode. The method further comprises collecting evaluation data indicative of a performance of said candidate AD feature, while the vehicle is operated with the candidate AD feature under the supervised operation mode during the driving scenario. With this aspect of the disclosed technology, similar advantages and preferred features are present as in the other aspects.

According to a second aspect, there is provided a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

According to a third aspect, there is provided a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect, there is provided a computing device for evaluating a candidate automated driving feature for a vehicle during a defined driving scenario, while the vehicle operates under a supervised operation mode. The driving scenario is defined at least by a specific route. The computing device comprises control circuitry configured to obtain driving preferences associated with the driver. The driving preferences being indicative of a desired performance level of the vehicle during said driving scenario. The control circuitry is further configured to obtain an expected performance level of the candidate AD feature during said driving scenario. The candidate AD feature is capable of operating on a higher autonomy level than the supervised operation mode. The control circuitry is further configured to, in response to the expected performance level meeting the desired performance level: activate the candidate AD feature under the supervised operation mode. The control circuitry is further configured to collect evaluation data indicative of a performance of said candidate AD feature, while the vehicle is operated with the candidate AD feature under the supervised operation mode during the driving scenario. With this aspect of the disclosed technology, similar advantages and preferred features are present as in the other aspects.

According to a fifth aspect, there is provided a computer-implemented method for collecting evaluation data indicative of a performance of a candidate automated driving, AD, feature for a vehicle during a defined driving scenario, while the vehicle operates under a supervised operation mode. The driving scenario is defined at least by a specific route. The method comprises obtaining, from each vehicle of a plurality of vehicles, driving preferences associated with a driver of said vehicle, the driving preferences being indicative of a desired performance level of said vehicle during said driving scenario. The method further comprises obtaining an expected performance level of the candidate AD feature during said driving scenario. The candidate AD feature is capable of operating at a higher autonomy level than the supervised operation mode. The method further comprises, in response to the expected performance level failing to meet the desired performance level of each of the plurality of vehicles during the driving scenario, dividing the driving scenario into a plurality of sub-scenarios. The method further comprises identifying two or more vehicles of the plurality of vehicles for which the expected performance level meets the desired performance level along a respective sub-scenario. The method further comprises sending instructions, to the two or more vehicles, to operate with the candidate AD feature under the supervised operation mode along the respective sub-scenario. The method further comprises collecting evaluation data indicative of a performance of said candidate AD feature, while the two or more vehicles operates with the candidate AD feature under the supervised operation mode along the respective sub-scenario. The method further comprises aggregating the evaluation data of each sub-scenario to obtain evaluation data over the driving scenario. With this aspect of the disclosed technology, similar advantages and preferred features are present as in the other aspects.

According to a sixth aspect, there is provided a computer program product comprising instructions which, when the program is executed by a computing device, causes the computing device to carry out the method according to any one of the embodiments of the fifth aspect disclosed herein. With this aspect of the disclosed technology, similar advantages and preferred features are present as in the other aspects.

According to a seventh aspect, there is provided a (non-transitory) computer-readable storage medium comprising instructions which, when executed by a computing device, causes the computing device to carry out the method according to any one of the embodiments of the fifth aspect disclosed herein. With this aspect of the disclosed technology, similar advantages and preferred features are present as in the other aspects.

According to an eighth aspect, there is provided a computing device for collecting evaluation data indicative of a performance of a candidate automated driving, AD, feature for a vehicle during a defined driving scenario, while the vehicle operates under a supervised operation mode. The driving scenario is defined at least by a specific route. The computing device comprises control circuitry configured to obtain, from each vehicle of a plurality of vehicles, driving preferences associated with a driver of said vehicle. The driving preferences being indicative of a desired performance level of said vehicle during said driving scenario. The control circuitry is further configured to obtain an expected performance level of the candidate AD feature during said driving scenario. The candidate AD feature has a higher autonomy level capability than the supervised operation mode. The control circuitry is further configured to, in response to the expected performance level failing to meet the desired performance level of each of the plurality of vehicles during the driving scenario, divide the driving scenario into a plurality of sub-scenarios. The control circuitry is further configured to identify two or more vehicles of the plurality of vehicles for which the expected performance level meets the desired performance level along a respective sub-scenario. The control circuitry is further configured to send instructions, to the two or more vehicles, to operate with the candidate AD feature under the supervised operation mode along the respective sub-scenario. The control circuitry is further configured to collect evaluation data indicative of a performance of said candidate AD feature, while the two or more vehicles operates with the candidate AD feature under the supervised operation mode along the respective sub-scenario. The control circuitry is further configured to aggregate the evaluation data of each sub-scenario to obtain evaluation data over the driving scenario. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that it allows for collection of valuable evaluation data during grey-launch or limited-launch, where the candidate AD feature is actually in control. This can offer more valuable data than during shadow-mode testing for instance.

An advantage of some embodiments is that it can offer closed-loop V&V data with respect to certain behavior, which shadow-mode testing cannot. The suggested evaluation approach can therefore increase the availability of relevant closed-loop data, which in turn can lead to richer variance of scenarios/driving scenarios for which the evaluation can be made.

An advantage of some embodiments is that it increases the number of possible scenarios in which it is possible to do a grey-launch or limited-launch of the candidate AD feature. In other words, it allows for activating the candidate AD feature in a broader context and in a more dynamic way, to gather valuable performance data at a greater scale, than if done by test drivers. Moreover, this can be done with limited degradation of driver satisfaction and vehicle performance. This data is otherwise hard and expensive to collect, e.g. when using a limited number of test drivers. Moreover, compared to evaluation through test drivers, it is possible to cover more scenarios and user experiences representative of real-world driving. Such scenarios may be difficult to find through traditional test drives.

An advantage of some embodiments is that it enables the activation of the candidate AD feature to be personalized to an individual driver, and their preferences. This can be done by activating the candidate AD feature for specific driving scenarios for which the performance level of the candidate AD feature has been confirmed for meeting the driving preferences of the driver.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method in accordance with some embodiments.
Figure 2 illustrates a computing device in accordance with some embodiments.
Figure 3 is a schematic flowchart representation of another method in accordance with some embodiments.
Figure 4 illustrates another computing device in accordance with some embodiments.
Figure 5 is a schematic illustration of a vehicle in accordance with some embodiments.
Figure 6 is a schematic illustration of a system in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

The disclosed technology relates to different aspects relating to the evaluation of a candidate automated driving (AD) feature (also referred to as AD feature under test), in a grey-launch or limited-launch manner. The evaluation of the candidate AD feature can be seen as collection of evaluation data for verification and validation (V&V) of the feature's performance.

The disclosed technology is at least partly based on the following realizations. Firstly, it is desirable to have the vehicle drive with the candidate AD feature as often as possible, to maximize the amount of V&V data that can be generated, as well as the range of different scenarios experienced. Secondly, a driving policy of how to drive may work well in one scenario (e.g. area/context/time), but may not be particularly enjoyable in another scenario. As an example, in a scenario of low risk of obstacles (such as on a highway), the vehicle may be able to operate at a satisfactory speed. But in a busier environment, it may require the speed of the vehicle to be reduced, to be able to fulfill the safety requirements. In addition, what works well for one driver, may not work well for another driver. Lastly, a supervised operation mode (such as Advanced Driver Assistance Systems, ADAS) is typically designed to be working well in a large number of driving scenarios (i.e. having a large operational design domain, ODD), while an unsupervised operation mode (such as Automated Driving (AD) technologies) are primarily designed to work in limited scenarios/ODDs. Generalizing the latter to also work in (i.e. perform efficiently in, as in that it should drive as a user may expect it too, and not too defensively) a wider range of scenarios may not be feasible, as it puts great requirements on the safety and reliability of the system to work without the supervision of the driver. To do this, the AD features may have to drive much more defensively (e.g. through reduced speed, or increased safety distances to other vehicles), something that the driver may not accept. What the inventors suggest is instead to activate the candidate AD feature within the context of the supervised operation mode, to leverage the wider range of applicability. The disclosed technology thus considers the driver preferences, which e.g. can be learned from how the driver normally drives, together with the expected performance of the candidate AD feature, to identify driving scenarios in which the candidate AD feature can be activated with limited effect on driver experience, and vehicle performance. The task at hand is to determine which operation mode to use in different areas/times/conditions. The disclosed technology aims both at optimizing each individual (i.e. vehicle and driver), as well as on a broader fleet level. This can then be used as a way of providing grey-launch or limited-launch feasibility calculation to increase V&V data generation, with low impact on customer satisfaction.

### Definitions

In the present context, an Automated Driving System (ADS) refers to a complex combination of hardware and software components designed to control and operate a vehicle without direct human intervention.

ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, such as cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features can often serve as building blocks for ADS. Examples include adaptive cruise control, lane-keeping assist, automatic emergency braking, and parking assistance. They enhance safety and convenience but typically require some level of human supervision and intervention. ADAS accordingly aims for lower levels of autonomy (such as Levels 1 and 2, according to the SAE International Standard), where the vehicle operates under some level of human supervision. ADAS features can thus be referred to as driver support features. The wording "supervised operation mode" (or supervised driving policy) as used herein, may in some embodiments refer to an ADAS context. In other words, the supervised operation mode may operate under conditions typically associated with ADAS features. The supervised operation model thus has a lower level of autonomy. A vehicle operating under the supervised operation model may thus drive with one or more driver support features active.

On the other hand, Automated Driving (AD) are technologies that are designed to control and navigate a vehicle without human supervision. Accordingly, it can be said that distinction between ADAS and AD lies in the level of autonomy and control. ADAS systems are designed to aid and support drivers, while an AD system aims to take full control of the vehicle without requiring constant human oversight. AD accordingly aims for higher levels of autonomy (such as Levels 3, 4 and 5, according to the SAE International standard), where the vehicle can operate independently in most or all driving scenarios without human intervention. Thus, the upper three levels of driving automation refer to cases in which the ADS perform the entire dynamic driving task on a sustained basis, when it is engaged.

As mentioned in the foregoing, the term "ADS" is used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth. The candidate AD feature (or AD feature under test) may thus refer to a feature or function falling within the level of autonomy of AD technologies.

The wording "driving scenario" herein refers to a specific set of conditions or circumstances under which the vehicle operates. This may encompass various factors relating to the environment, or that can affect the driving experience, the vehicle's performance, and how it operates. The driving scenario may e.g. comprise one or more of a specific route, time of day, traffic levels, weather, etc. The driving scenario will be further explained below.

The term "Operational Design Domain" (ODD) may be understood as the specific operating conditions and environments in which an ADS or autonomous vehicle is intended to function safely and effectively. It defines the boundaries within which the automated driving system is designed and validated to operate. The ODD conditions may be divided into external ODD conditions and internal ODD conditions. Here, the external ODD conditions may refer to external factors or environmental elements that impact the operation of the automated driving system. The internal ODD conditions may refer to the capabilities and limitations inherent to the autonomous vehicle or the ADS itself.

The external ODD conditions may include geographical limits defining the geographic area or region where the ADS is intended to operate, such as urban areas, highways, or specific cities. The external ODD conditions may include environmental factors including conditions like weather (rain, snow, fog, etc.), lighting conditions (daylight, night-time), and various terrains (mountainous, urban, rural) that affect the ADS's sensors and perception systems. The external ODD conditions may include road infrastructure comprising the types of roads, lanes, intersections, signage, and road markings the ADS is designed to navigate. The external ODD conditions may include traffic conditions comprising variations in traffic density, behavior of other vehicles, pedestrians, and cyclists.

The internal ODD conditions may include sensor capability parameters, such as e.g., the range, accuracy, and reliability of sensors such as cameras, LiDAR, radar, and other perception systems. The internal ODD conditions may include processing and decision-making parameters comprising computing power and algorithms used for interpreting sensor data, making driving decisions, and controlling the vehicle. The internal ODD conditions may include functional capability parameters comprising the specific capabilities of the ADS, including its ability to handle complex traffic situations, navigate intersections, change lanes, park, and perform emergency maneuvers.

As used herein, the wording "one or more of" a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

As used herein, the term "if" may be construed to mean "when or "upon" or "in response to" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

### Embodiments

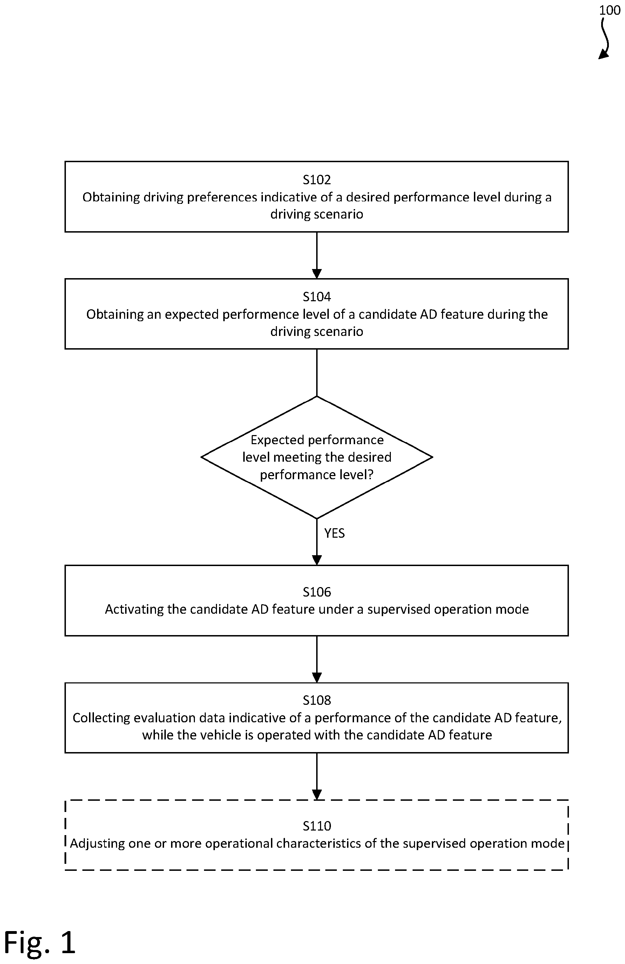

Figure 1 illustrates a schematic flowchart representation of a method 100 in accordance with some embodiments. More specifically, the method 100 may be a method for evaluating a candidate automated driving (AD) feature for a vehicle. The candidate AD feature being evaluated during a defined driving scenario, while the vehicle operates under a supervised operation mode.

As mentioned in the foregoing, the candidate AD feature is to be understood as a feature capable of operating on a higher autonomy level than the supervised operation mode. In other words, the candidate AD feature has a higher autonomy level capability than a general autonomy level of the supervised operation mode. By capable, it is herein meant that the candidate AD feature, once validated and verified, is capable to be implemented with a higher autonomy level, e.g. as part of an unsupervised operation mode. However, during the evaluation, the candidate AD feature is activated under the supervised operation mode, in which its capability is limited to what is allowed during this operation mode. The autonomy level herein refers e.g. to the autonomy levels of the SAE International Standard mentioned above. The candidate AD feature may e.g. be a level 4 feature, that is effectively operating as a level 2 feature, while activated under the supervised operating mode. Once it has been validated, it may be deployed as a level 4 feature.

It is to be noted that the autonomy level herein generally refers to the level of required supervision of the AD feature or operation mode. Rather than a performance (such as robustness, stability, reliability or confidence) of the AD feature or operation mode. An AD feature or operating mode having a lower autonomy level can either have a higher or lower confidence in the actions it takes, than an AD feature or operating mode having a higher autonomy level.

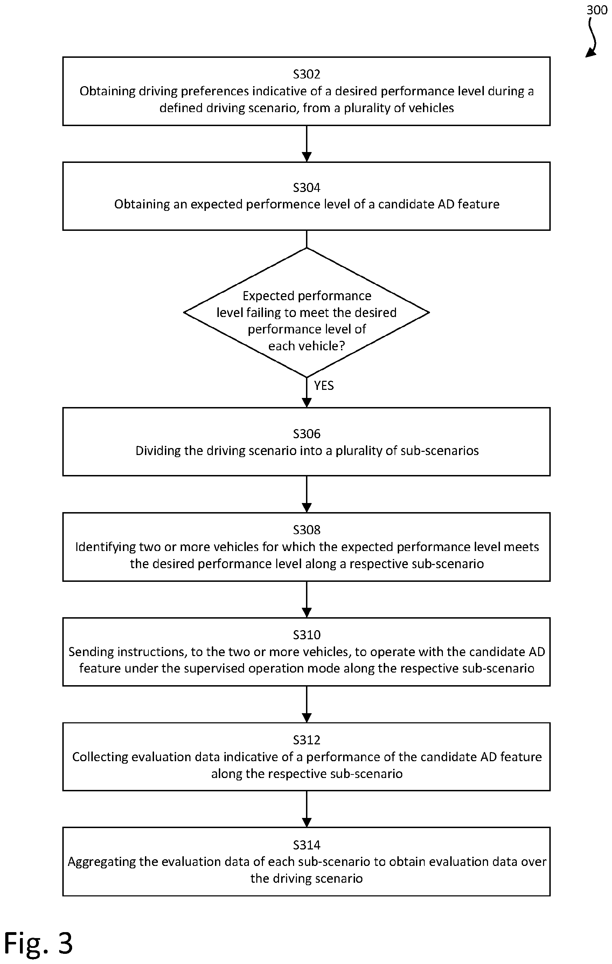

The method 100 is preferably a computer-implemented method. The method 100 may e.g. be performed by a processing system of a vehicle. The processing system may for example comprise one or more processors and one or more memories coupled to the one or more processors, wherein the one or more memories store one or more programs that perform the steps, services and functions of the method 100 disclosed herein when executed by the one or more processors. It is however to be appreciated that the steps of the method may be distributed over two or more processing systems, such as between a vehicle and a server (may also be referred to as remote server, cloud server, central server, back-office server, fleet server, or back-end server), which will be further elaborated upon herein. Additionally, the method 100 (or at least parts thereof) may find applicability also in an offline environment, e.g. performed by a server. An example of how the herein described concepts can be applied across a fleet of vehicles will be further described below, in connection with Fig. 3.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S102, and S104 may be performed independently of each other, concurrently, in any order or at any point in time, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein described embodiments are only given as examples and should not be limiting to the present invention. Other solutions, uses, objectives, and functions within the scope of the invention as claimed below described patent claims should be apparent for the person skilled in the art. It should be appreciated that any steps which are comprised in dashed lines are examples of a number of optional steps which may form part of a number of alternative embodiments. The optional steps need not be performed in order. Furthermore, it should be appreciated that not all of the optional steps need to be performed.

As described above, the candidate AD feature is evaluated during a defined driving scenario, while the vehicle is operating under a supervised operation mode. The wording "operates under" as in the vehicle "operates under a supervised operation mode", can be understood as operating under the rules or constraints of the supervised operation mode. For example, as explained above, the supervised operation mode may correspond to an ADAS driving policy. The candidate AD feature on the other hand is capable of operating on a higher autonomy level than the supervised operation mode. Thereby, when the candidate AD feature is activated (as further described below) under the supervised operation mode, it can be capped (or limited) to operate at the autonomy level of the supervised operation mode, and thus prevented from performing actions that would not be part of the supervised operation mode. More specifically, the candidate AD feature may herein refer to an AD feature that when verified constitutes an automated driving feature. However, when activated under the supervised operation mode, the feature can be seen as a supervised driving automation feature, i.e., a driver support feature, with the possibility of becoming an AD feature.

The method 100 comprises obtaining S102 driving preferences associated with the driver. The driving preferences being indicative of a desired performance level of the vehicle during said driving scenario.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. For example, obtaining driving preferences associated with the driver may encompass determining or computing the driver preferences based on some parameters, or retrieving stored driving preferences from a memory or another entity.

The driving scenario may be defined at least by a specific route. Thus, the obtained driving preferences may be indicative of a desired performance level of the vehicle along the specific route. The specific route may thus be a stretch of road from a point A to a point B. The specific route may be a path or course taken by the vehicle, which can include different types of roads (e.g. highways, city streets, rural roads), intersections, and roundabouts.

The driving scenario may be further defined by one or more of a geographical area, a time-of-day, a day-of-the-week, a vehicle state, and a set of environmental conditions pertaining to a driving environment of the vehicle. The geographical area refers to a specifically defined region, such as an urban environment, highway segments, etc. The time of day herein refers to the time during which the driving occurs, which can influence visibility, traffic patterns, and driver alertness (e.g., morning rush hour, midday, evening, nighttime, etc.). The traffic level refers to the density and flow of other vehicles on the road, which can range from light traffic to heavy congestion. Similarly, the day-of-the-week refers to the day during which the driving occurs, such that weekday or weekend. The vehicle state may refer to internal states of the vehicle which in some way defines how it is operated. The vehicle states may e.g. be whether or not the driver is driving based on GPS navigation, if the driver is consuming any media through an entertainment system of the vehicle which may affect the driver's concentration, or if the driver has set an upper or lower speed limit on a cruise control.

The environmental conditions may be one or more of weather conditions, ambient light conditions, traffic conditions, and road surface conditions. The weather conditions may e.g. be clear skies, rain, snow, or fog, which can affect the visibility of the driver and onboard sensors of the vehicle. The weather conditions may further refer to temperature conditions, e.g. above or below freezing. The ambient light conditions may define a level of natural or artificial light available, including daylight, dusk, dawn, and nighttime, as well as street lighting. The ambient light conditions may further define a glare from the sun or other light sources. The traffic conditions may refer to average speed, and mean distance between surrounding vehicles, or driving at reduced speed due to congestions. Road surface conditions may refer to a physical state of the road surface, including smoothness, wetness, slipperiness, debris, etc. The environmental conditions may further relate to the presence (and amount of) of other road users in the surroundings, such as pedestrians, cyclists, road works, animals, etc.

It is to be understood that the driving scenario may be defined by any combination of the above-mentioned examples. The driving scenario may for instance be defined by a specific route, and during a specific time-of-day. For example, the route from point A to point B, and between 10am and 2pm.

The driving preferences is herein to be understood as how the driver wants or expects the vehicle to be driven. As explained above, the driving preferences is indicative of a desired performance level of the vehicle during the driving scenario. The desired performance level may e.g. be associated with a travelling speed, maneuvering characteristic, or general operational capability of the vehicle. In some embodiments, the desired performance level is defined by a lowest speed accepted by the driver. The desired performance level may in some embodiments be an actual performance level of the supervised operation mode, i.e. with the current driver support features of the supervised operation mode.

The driver preferences may be determined from historical data of how the driver has previously driven under the supervised operation mode during said driving scenario. In other words, the driver preferences can be learned from how the driver normally drives in the specific driving scenario. Thus, the driver preferences can be learned as an aggregation of several trips during said driving scenario. For instance, when the driving scenario is defined (at least partly) by a specific route, the operation (such as the driving characteristics including travelling speed, distance to other vehicles, etc.) of the vehicle can be recorded during previous travels along the route. This may for instance be done for a route along which the driver travels regularly, such as during a commute. By learning the driver preferences from historical data, it is possible to better understand what the driver expects, or accepts, in terms of possible feature degradation, thereby allowing to better adapt the evaluation of the candidate AD feature. By historical data, it is herein meant data obtained from previous trips.

In another example, the desired performance level may be determined during runtime. In other words, the driver preferences may be determined from current data. By current data, it is herein meant data obtained from the current trip of the vehicle.

In another example, driver preferences may be obtained by monitoring how the driver reacts to an action performed by the supervised operation mode (e.g. whether the driver overrides or not overrides the actions). A driver overriding the action may be an indication of that the driver is not satisfied, and vice versa.

The desired performance level may comprise a current performance level of the supervised operation mode during said driving scenario. For example, the desired performance level may be determined as a current speed of the vehicle. In other words, the current performance level may be defined by a current speed of the vehicle driven under the supervised operation mode.

The current speed may be an average speed over a certain time window or distance. The time window may e.g. be the last 5, 10, or 20 minutes, etc. The distance may e.g. be the last 5, 10, or 20 km. It can for instance be detected that the driver prefers to drive at 100km/h, despite the speed limit being 110km/h along a highway. The limit for what the driver can be expected to accept can therefore be determined as 100km/h. The desired performance level may further comprise a driver specific range being indicative of an acceptable deviation from the current performance level. In other words, the desired performance level may define an acceptable (by the specific driver) deviation from the current performance of the vehicle. In a concrete example, the driver may set the speed at 90 km/h. The current performance level may thus be 90 km/h. However, the driver may accept the vehicle to be driven at the current performance level 95% of the time, for a given time frame, or a rolling time window. This flexibility can thus be introduced through the driver specific range.

The method 100 further comprises obtaining S104 an expected performance level of the candidate AD feature during said driving scenario. The expected performance level may thus be seen as indicative of how the vehicle is expected to operate if the candidate AD feature is activated. The expected performance level may be defined by a maximum speed that the candidate AD feature can achieve during said driving scenario. The expected performance level may further be defined by one or more of number of harsh interventions, degree of harsh interventions, number of surprising maneuvers, degree of surprising maneuvers, amount of longitudinal and/or lateral jerk, number of takeovers, etc.

The expected performance level of the candidate AD feature may be determined through shadow-mode testing. In other words, the expected performance level can be determined by having the candidate AD feature operate in parallel with the human driver, or with the supervised operation mode, but without actually controlling the vehicle. Instead, the candidate AD feature "shadows" the driver's actions and decision, recording data and making predictions as if it were controlling the vehicle. In this way, the expected performance level can be learned without affecting the operation of the vehicle, or compromising safety. It is however to be appreciated that other ways of obtaining S104 the expected performance level are applicable as well.

In response to the expected performance level meeting the desired performance level, the method 100 further comprises activating S106 the candidate AD feature under the supervised operation mode. Put differently, if the expected performance level fulfills the desired performance level, the candidate AD feature may be engaged, under the context of the supervised operation mode, and during the driving scenario.

The expected performance level may "meet" the desired performance level if, for instance, it is within a defined range from the desired performance level. In another example, the expected performance level may "meet" the desired performance level if a difference between the expected and desired performance levels is below a threshold value. The defined range and the threshold value may be driver specific metrics indicating how much deviation from the desired performance level the driver accepts. In some embodiments, the expected performance level meets the desired performance level if the expected performance level is within the driver specific range from the current performance level. It is to be appreciated that other ways of determining whether the expected performance level meets (or fulfills) the desired performance level are applicable as well. For example, by comparison between the maximum speed that the candidate AD feature can achieve during the driving scenario, and the lowest speed accepted by the driver, during the driving scenario.

Further in response to the expected performance level meeting the desired performance level, the method 100 further comprises collecting S108 evaluation data indicative of a performance of said candidate AD feature, while the vehicle is operated with the candidate AD feature under the supervised operation mode during the driving scenario. The performance of the candidate AD feature may e.g. be a measure of its robustness, stability, reliability or confidence in the actions it takes, and/or what safety requirements it meets. I.e. any metrics relevant for the validation and verification of the candidate AD feature, for its development and potential deployment. This can be put in contrast to the performance level of the candidate AD feature, which generally relates to characteristics of how it operates the vehicle, e.g. in terms of speed, acceleration, maneuverability, etc.

The vehicle is thus operating with the candidate AD feature activated during the specific driving scenario in which it has been found to fulfill the driving preferences of the driver. Thereby, the candidate AD feature can be activated without any significant feature degradation or performance reduction noticeable to the driver. As an example, it can be determined that the vehicle can be operated with the candidate AD feature with acceptable (by the driver) performance during the driving scenario (e.g. along a route from A to B). The candidate AD feature can then be activated for at least part of the driving scenario (e.g. somewhere along the route from A to B).

It is to be appreciated that the candidate AD feature, when operating under the supervised operation mode, can be limited to performing actions which would normally be allowed by driver support features of the supervised operation mode. Nevertheless, the candidate AD feature is in actual control of the operation of the vehicle (within these limits), thereby generating valuable data indicating the performance of the feature. The limitations in what actions the candidate AD feature is allowed to make can be implemented in a separate system configured to filter the output of the candidate AD feature before it is sent to a maneuvering system of the vehicle. Thereby, the candidate AD feature can operate as if it would be activated in an unsupervised operation mode. The evaluation data may thus be seen as V&V data of the candidate AD feature during actual operation, at least while control signals outputted from the candidate AD feature are within what is allowed under the supervised operation mode. The evaluation data may be stored locally on the vehicle, and later transmitted to a server for evaluation or further development of the candidate AD feature.

The method 100 may further comprise adjusting S110 one or more operational characteristics of the supervised operation mode in view of one or more operational characteristics of the candidate AD feature, thereby obtaining an updated supervised driving operation mode. The obtained driving preferences may be indicative of a desired performance level of the vehicle during said driving scenario, while operating under the updated supervised operation mode. The operational characteristics of the candidate AD feature and of the supervised operation mode may be seen as characteristics of how they operate, such as distance to other vehicles, aggressiveness in maneuvering, number of harsh interventions, etc. Adjusting the operational characteristics of the supervised operation mode may be advantageous in that it can increase the number of scenarios at which the candidate AD feature can be activated, and evaluated. For example, it may be the case that the driver preferences (or rather what the driver accepts in terms of feature degradation) is not actually limited to how the vehicle normally operates, but instead accepts something else. The expected performance level of the candidate AD feature, and the desired (or rather actual) performance level of the supervised operation mode may be limited in different ways. Looking for instance at the ODD of an AD feature, it is typically more limited than an ODD of a driver support feature, meaning there are less scenarios it can (or is allowed to) operate in. However, the ODD of the AD feature need not to be a strict subset of the ODD of the driver support feature. In other words, the candidate AD feature may be limited in a different way than the supervised operation mode. The limitations of the supervised operation mode may thus be limiting in the number of scenarios in which the AD feature can be activated. Put differently, the supervised operation mode may drive differently from the candidate AD feature in some aspect, e.g. as concluded from their operational characteristics. It may then be possible to adjust the operational characteristics of the supervised operation mode, without affecting the driver satisfaction, to make it operate a bit more like the candidate AD feature would. As a concrete example, the candidate AD feature may want to position the vehicle relatively close to a lane delimiter towards an oncoming lane or a fast-lane, or a central portion of the road when driving in a forest, while the supervised operation mode systematically positions the vehicle in the middle of the lane. The behavior of the supervised operation mode (i.e. its operational characteristics), can then be adjusted to become more like the candidate AD feature, thereby increasing the availability of scenarios in which the candidate AD feature can be evaluated. After having adjusted the operational characteristics of the supervised operation mode, new driver preferences may be obtained, for the updated supervised operation mode.

Executable instructions for performing these functions are, optionally, included in a non-transitory computer-readable storage medium or other computer program product configured for execution by one or more processors.

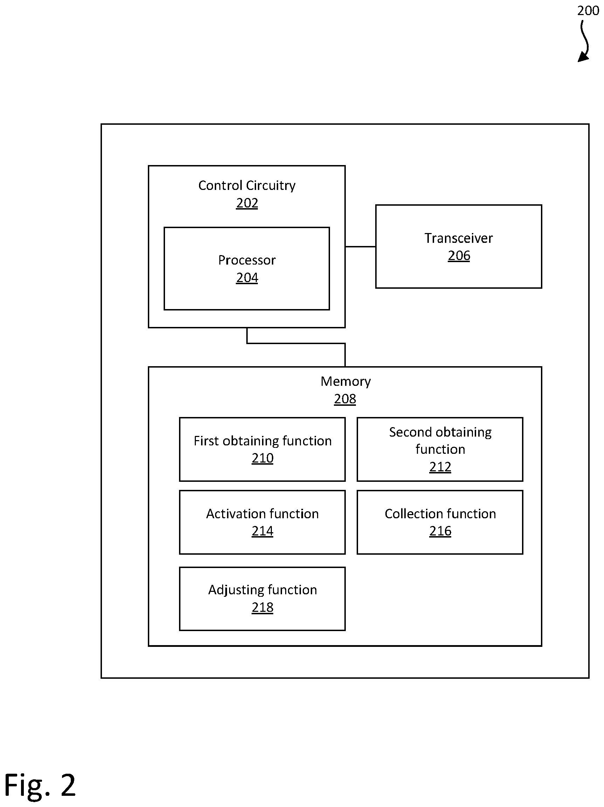

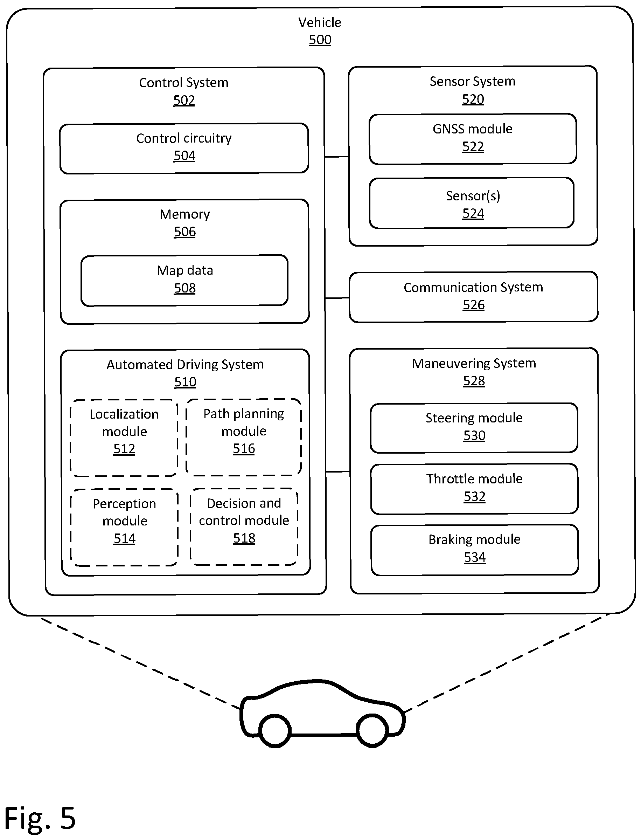

Figure 2 is a schematic illustration of a computing device 200 in accordance with some embodiments. The computing device 200 as described herein refers to any computer system, processing system or general computing device. Even though the computing device 200 is herein illustrated as one device, the computing device 200 may be a distributed computing system, formed by a number of different computational devices. The computing device 200 is configured for evaluating a candidate automated driving (AD) feature for a vehicle during a defined driving scenario, while the vehicle operates under a supervised operation mode. The driving scenario being defined at least by a specific route. The computing device 200 may thus be provided as part of a vehicle, such as the vehicle 500 described below in connection with Fig. 5.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 308 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps of the method 100 may be implemented in one or more functions stored in the memory 208.

The transceiver 206 is configured to enable the computing device 200 to communicate with other entities, such as vehicles or servers. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random-access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain driving preferences associated with the driver. The driving preferences being indicative of a desired performance level of the vehicle during said driving scenario. This may be performed e.g. by execution of a first obtaining function 210.

The control circuitry 202 is further configured to obtain an expected performance level of the candidate AD feature during said driving scenario. The candidate AD feature being capable of operating on a higher autonomy level than the supervised operation mode. This may be performed e.g. by execution of a second obtaining function 212. It is to be noted that the first and second obtaining function may be implemented as a common obtaining function.

The control circuitry 202 is further configured to activate the candidate AD feature under the supervised operation mode, in response to the expected performance level meeting the desired performance level. This may be performed e.g. by execution of am activation function 214.

The control circuitry 202 is further configured to collect evaluation data indicative of a performance of said candidate AD feature, while the vehicle is operated with the candidate AD feature under the supervised operation mode during the driving scenario. This may be performed e.g. by execution of a collection function 216.

The control circuitry 202 may be further configured to adjust one or more operational characteristics of the supervised driving operation mode in view of one or more operational characteristics of the candidate AD feature, thereby obtaining an updated supervised driving operation mode. The obtained driving preferences being indicative of a desired performance level of the vehicle during said driving scenario, while operating under the updated supervised driving operation mode. This may be performed e.g. by execution of an adjusting function 218.

It should be noted that the principles, features, aspects, and advantages of the method 100 as described above in connection with Fig. 1, are applicable also to the computing device 200 as described herein. In order to avoid undue repetition, reference is made to the above.

Figure 3 illustrates a schematic flowchart representation of a method 300 in accordance with some embodiments. More specifically, the method 300 may be a method for collecting evaluation data indicative of a performance of a candidate automated driving feature for a vehicle, during a defined driving scenario, while the vehicle operates under a supervised operation mode.

The method 300 described in the following can be seen as an implementation of the method 100 described above in connection with Fig 1, but on a fleet-level. What has been described above in connection with Fig. 1 may thus be seen as what happens in a vehicle. Any principles and aspects described in connection with the method 100 above, are therefore applicable also to the method 300 described herein, and vice versa. In short, the method 300 described in the following is at least partly based on partitioning the driving scenario into smaller segments, dispatching the candidate AD feature in different vehicles along different segments, measuring the performance of the candidate AD feature on an individual vehicle level, and then aggregate over the entire driving scenario. This can be advantageous for example when no driver is judged to accept the candidate AD feature for the entire duration of the driving scenario, but where a smaller segment per vehicle, may be acceptable.

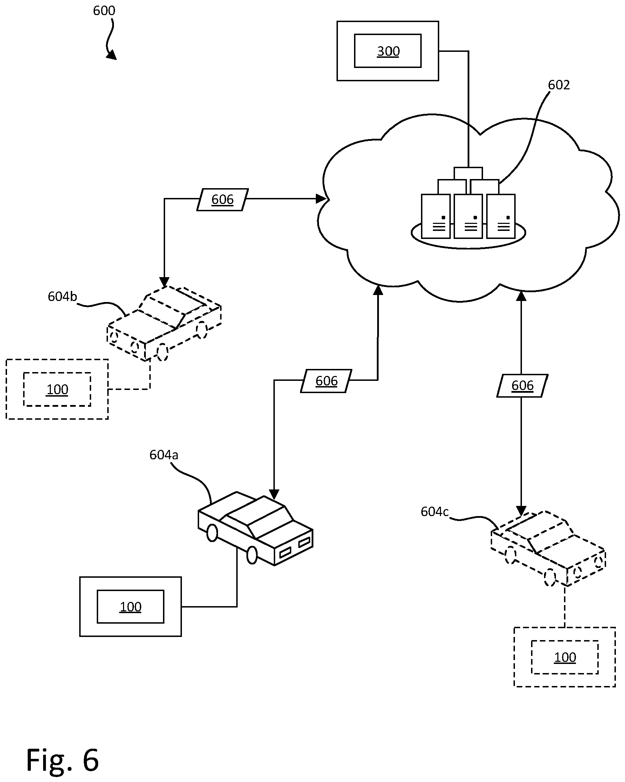

The method 300 is preferably a computer-implemented method. The method 300 may e.g. be performed by a processing system of a server (may also be referred to as remote server, cloud server, central server, back-office server, fleet server, or back-end server), such as the server 602 described below in connection with Fig. 6. The processing system may for example comprise one or more processors and one or more memories coupled to the one or more processors, wherein the one or more memories store one or more programs that perform the steps, services and functions of the method 300 disclosed herein when executed by the one or more processors. It is however to be appreciated that the steps of the method may be distributed over two or more processing systems.

Below, the different steps of the method 300 are described in more detail. Even though illustrated in a specific order, the steps of the method 300 may be performed in any suitable order as well as multiple times. Thus, although Fig. 3 may show a specific order of method steps, the order of the steps may differ from what is depicted. In addition, two or more steps may be performed concurrently or with partial concurrence. For example, the steps denoted S302, and S304 may be performed independently of each other, concurrently, in any order or at any point in time, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 300 will become apparent from the present disclosure. The herein described embodiments are only given as examples and should not be limiting to the present invention. Other solutions, uses, objectives, and functions within the scope of the invention as claimed below described patent claims should be apparent for the person skilled in the art.

The method 300 comprises obtaining S302, from each vehicle of a plurality of vehicles, driving preferences associated with a driver of said vehicle. The driving preferences being indicative of a desired performance level of said vehicle during said driving scenario. The driving preferences can be managed by the individual vehicles, and for the individual drivers, in accordance with what has been described above.

The method 300 further comprises obtaining S304 an expected performance level of the candidate AD feature during said driving scenario.

The method 300 further comprises dividing S306 the driving scenario into a plurality of sub-scenarios, in response to the expected performance level failing to meet the desired performance level of each of the plurality of vehicles during the (entire) driving scenario. I.e. if no match is found. In other words, the driving scenario can be divided S306 if none of the vehicles is found to have a desired performance level which the expected performance level can fulfill. If the expected performance level meets the desired performance level of any of the vehicles, that vehicle can be instructed to activate the candidate AD feature during the entire driving scenario, according to the principles described above in connection with Fig. 1.

Dividing the driving scenario into a plurality of sub-scenarios can be done differently, depending on the way the driving scenario is defined. For example, in case the driving scenario is defined by a specific route, the route can be divided into a plurality of route segments. In this case, the driving scenario may be divided in response to the expected performance level failing to meet the desired performance level of each of the plurality of vehicles along the specific route. For example, given a 10km stretch of road along which the candidate AD feature is to be evaluated. Instead of making one vehicle drive with the candidate AD feature along the entire stretch of road, 100 cars can drive different fractions of that stretch of road using the candidate AD feature, with limited effect on user experience. If then aggregating the measured performance, an equivalent coverage of the entire 10km can be obtained this way.

The method 300 further comprises identifying S308 two or more vehicles of the plurality of vehicles for which the expected performance level meets the desired performance level along a respective sub-scenario. This can e.g. be done locally on the server, in accordance with how it is done in a vehicle described above in connection with Fig. 1. Alternatively, the step denoted S308 may comprise transmitting the plurality of sub-scenarios to the plurality of vehicles, and have them check for fulfillment of the desired performance level, and respond with an indication for which sub-scenario(s) the expected performance level meets the desired performance levels.

The method 300 further comprises sending S310 instructions, to the two or more vehicles, to operate with the candidate AD feature under the supervised operation mode along the respective sub-scenario.

The method 300 further comprises collecting S312 evaluation data indicative of a performance of said candidate AD feature, while the two or more vehicles operates with the candidate AD feature under the supervised operation mode along the respective sub-scenario. The evaluation may be collected S312 by receiving the evaluation data from each of the two or more vehicles.

The method 300 further comprises aggregating S314 the evaluation data of each sub-scenario to obtain evaluation data over the (entire) driving scenario.

Executable instructions for performing these functions are, optionally, included in a non-transitory computer-readable storage medium or other computer program product configured for execution by one or more processors.

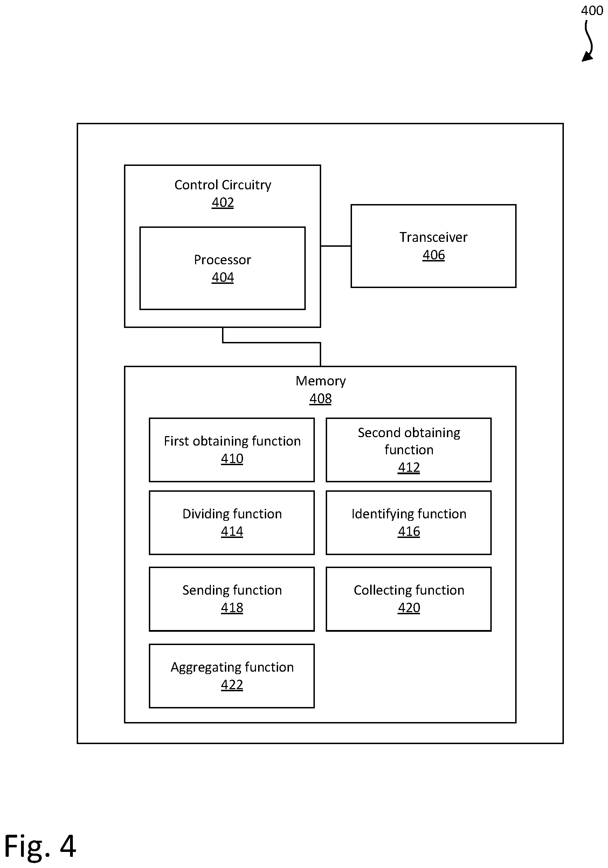

Figure 4 is a schematic illustration of a computing device 400 in accordance with some embodiments. The computing device 400 as described herein refers to any computer system, processing system or general computing device. Even though the computing device 400 is herein illustrated as one device, the computing device 400 may be a distributed computing system, formed by a number of different computational devices. The computing device 400 may be a server, or a fleet server, such as the server described below in connection with Fig. 6. The server being communicatively connected to a plurality (or fleet) of vehicles. The computing device 400 is configured for collecting evaluation data indicative of a performance of a candidate automated driving feature for a vehicle during a defined driving scenario, while the vehicle operates under a supervised operation mode. The driving scenario being defined at least by a specific route.

The computing device 400 comprises control circuitry 402. The control circuitry 402 may physically comprise one single circuitry device. Alternatively, the control circuitry 402 may be distributed over several circuitry devices.

As shown in the example of Fig. 4, the computing device 400 may further comprise a transceiver 406 and a memory 408. The control circuitry 402 being communicatively connected to the transceiver 406 and the memory 408. The control circuitry 402 may comprise a data bus, and the control circuitry 402 may communicate with the transceiver 406 and/or the memory 408 via the data bus.

The control circuitry 402 may be configured to carry out overall control of functions and operations of the computing device 400. The control circuitry 402 may include a processor 404, such as a central processing unit (CPU), microcontroller, or microprocessor. The processor 404 may be configured to execute program code stored in the memory 408, in order to carry out functions and operations of the computing device 400. The control circuitry 402 is configured to perform the steps of the method 300 as described above in connection with Fig. 3. The steps of the method 100 may be implemented in one or more functions stored in the memory 408.

The transceiver 406 is configured to enable the computing device 400 to communicate with other entities, such as the fleet of vehicles. The transceiver 406 may both transmit data from and receive data to the computing device 400.

The memory 408 may be a non-transitory computer-readable storage medium. The memory 408 may be one or more of a buffer, a flash memory, a hard drive, a removable media, a volatile memory, a non-volatile memory, a random-access memory (RAM), or another suitable device. In a typical arrangement, the memory 408 may include a non-volatile memory for long-term data storage and a volatile memory that functions as system memory for the computing device 400. The memory 408 may exchange data with the circuitry 402 over the data bus. Accompanying control lines and an address bus between the memory 408 and the circuitry 402 also may be present.

Functions and operations of the computing device 400 may be implemented in the form of executable logic routines (e.g., lines of code, software programs, etc.) that are stored on a non-transitory computer readable recording medium (e.g., the memory 408) of the computing device 400 and are executed by the circuitry 402 (e.g., using the processor 404). Put differently, when it is stated that the circuitry 402 is configured to execute a specific function, the processor 404 of the circuitry 402 may be configured execute program code portions stored on the memory 408, wherein the stored program code portions correspond to the specific function. Furthermore, the functions and operations of the circuitry 402 may be a stand-alone software application or form a part of a software application that carries out additional tasks related to the circuitry 402. The described functions and operations may be considered a method that the corresponding device is configured to carry out, such as the method 300 discussed above in connection with Fig. 3. In addition, while the described functions and operations may be implemented in software, such functionality may as well be carried out via dedicated hardware or firmware, or some combination of one or more of hardware, firmware, and software. In the following, the function and operations of the computing device 400 is described.

The control circuitry 402 is configured to obtain, from each vehicle of a plurality of vehicles, driving preferences associated with a driver of said vehicle. The driving preferences being indicative of a desired performance level of said vehicle during said driving scenario. This may be performed e.g. by execution of a first obtaining function 410.

The control circuitry 402 is further configured to obtain an expected performance level of the candidate AD feature during said driving scenario. The candidate AD feature being capable of operating on a higher autonomy level than the supervised operation mode. This may be performed e.g. by execution of a second obtaining function 412. It is to be noted that the first and second obtaining function may be implemented as a common obtaining function.

The control circuitry 402 is further configured to divide the driving scenario into a plurality of sub-scenarios, in response to the expected performance level failing to meet the desired performance level of each of the plurality of vehicles during the driving scenario. This may be performed e.g. by execution of a dividing function 414.

The control circuitry 402 is further configured to identify two or more vehicles of the plurality of vehicles for which the expected performance level meets the desired performance level along a respective sub-scenario. This may be performed e.g. by execution of an identifying function 416.

The control circuitry 402 is further configured to send instructions, to the two or more vehicles, to operate with the candidate AD feature under the supervised operation mode along the respective sub-scenario. This may be performed e.g. by execution of a sending function 418.

The control circuitry 402 is further configured to collect evaluation data indicative of a performance of said candidate AD feature, while the two or more vehicles operates with the candidate AD feature under the supervised operation mode along the respective sub-scenario. This may be performed e.g. by execution of a collecting function 420.

The control circuitry 402 is further configured to aggregate the evaluation data of each sub-scenario to obtain evaluation data over the driving scenario. This may be performed e.g. by execution of an aggregating function 422.

It should be noted that the principles, features, aspects, and advantages of the method 300 as described above in connection with Fig. 3, are applicable also to the computing device 400 as described herein. In order to avoid undue repetition, reference is made to the above.

Figure 5 is a schematic illustration of a vehicle 500 in accordance with some embodiments. The vehicle 500 is equipped with an Automated Driving System (ADS) 510. As used herein, a "vehicle" is any form of motorized transport. For example, the vehicle 500 may be any road vehicle such as a car (as illustrated herein), a motorcycle, a (cargo) truck, a bus, a smart bicycle, etc.

The herein disclosed vehicle 500 is configured to perform the method 100 as described above in connection with Fig. 1. This may e.g. be performed by control circuitry 504 of the vehicle (further described below). Seen differently, the vehicle 500 may comprise the computing device 300 as described above in connection with Fig. 3. The computing device 300 may be integrated in the vehicle, e.g. as part of the control system 502 of the vehicle. The computing device 300 may share its control circuitry 302 with the control circuitry 504 of the vehicle 500.

The vehicle 500 comprises a number of elements which can be commonly found in autonomous or semi-autonomous vehicles. It will be understood that the vehicle 500 can have any combination of the various elements shown in Fig. 5. Moreover, the vehicle 500 may comprise further elements than those shown in Fig. 5. While the various elements are herein shown as located inside the vehicle 500, one or more of the elements can be located externally to the vehicle 500. Further, even though the various elements are herein depicted in a certain arrangement, the various elements may also be implemented in different arrangements, as readily understood by the skilled person. It should be further noted that the various elements may be communicatively connected to each other in any suitable way. The vehicle 500 of Fig. 5 should be seen merely as an illustrative example, as the elements of the vehicle 500 can be realized in several different ways.

The vehicle 500 comprises a control system 502. The control system 502 is configured to carry out overall control of functions and operations of the vehicle 500. The control system 502 comprises control circuitry 504 and a memory 506. The control circuitry 502 may physically comprise one single circuitry device. Alternatively, the control circuitry 502 may be distributed over several circuitry devices. As an example, the control system 502 may share its control circuitry 504 with other parts of the vehicle. The control circuitry 502 may comprise one or more processors, such as a central processing unit (CPU), microcontroller, or microprocessor. The one or more processors may be configured to execute program code stored in the memory 506, in order to carry out functions and operations of the vehicle 500. The processor(s) may be or include any number of hardware components for conducting data or signal processing or for executing computer code stored in the memory 506. In some embodiments, the control circuitry 504, or some functions thereof, may be implemented on one or more so-called system-on-a-chips (SoC). As an example, the ADS 510 may be implemented on a SoC. The memory 506 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 506 may include database components, object code components, script components, or any other type of information structure for supporting the various activities of the present description.

In the illustrated example, the memory 506 further stores map data 508. The map data 508 may for instance be used by the ADS 510 of the vehicle 500 in order to perform automated functions of the vehicle 500. The map data 508 may comprise high-definition (HD) map data. It is contemplated that the memory 508, even though illustrated as a separate element from the ADS 510, may be provided as an integral element of the ADS 510. In other words, according to some embodiments, any distributed or local memory device may be utilized in the realization of the present inventive concept. Similarly, the control circuitry 504 may be distributed e.g. such that one or more processors of the control circuitry 504 is provided as integral elements of the ADS 510 or any other system of the vehicle 500. In other words, according to an exemplary embodiment, any distributed or local control circuitry device may be utilized in the realization of the present inventive concept.

The vehicle 500 further comprises a sensor system 520. The sensor system 520 is configured to acquire sensory data about the vehicle itself, or of its surroundings. The sensor system 520 may for example comprise a Global Navigation Satellite System (GNSS) module 522 (such as a GPS) configured to collect geographical position data of the vehicle 500. The sensor system 520 may further comprise one or more sensors 524. The one or more sensor(s) 524 may be any type of on-board sensors, such as cameras, LIDARs and RADARs, ultrasonic sensors, gyroscopes, accelerometers, odometers etc. It should be appreciated that the sensor system 520 may also provide the possibility to acquire sensory data directly or via dedicated sensor control circuitry in the vehicle 500.

The vehicle 500 further comprises a communication system 526. The communication system 526 is configured to communicate with external units, such as other vehicles (i.e. via vehicle-to-vehicle (V2V) communication protocols), remote servers (e.g. cloud servers, as shown above in connection with Fig. 4), databases or other external devices, i.e. vehicle-to-infrastructure (V2I) or vehicle-to-everything (V2X) communication protocols. The communication system 526 may communicate using one or more communication technologies. The communication system 526 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 500 or with local infrastructure elements. ETSI is working on cellular standards for vehicle communication and for instance 5G is considered as a suitable solution due to the low latency and efficient handling of high bandwidths and communication channels.

The communication system 526 may further provide the possibility to send output to a remote location (e.g. remote operator or control center) by means of the one or more antennas. Moreover, the communication system 526 may be further configured to allow the various elements of the vehicle 500 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 500 further comprises a maneuvering system 520. The maneuvering system 528 is configured to control the maneuvering of the vehicle 500. The maneuvering system 528 comprises a steering module 530 configured to control the heading of the vehicle 500. The maneuvering system 528 further comprises a throttle module 532 configured to control actuation of the throttle of the vehicle 500. The maneuvering system 528 further comprises a braking module 534 configured to control actuation of the brakes of the vehicle 500. The various modules of the steering system 528 may receive manual input from a driver of the vehicle 500 (i.e. from a steering wheel, a gas pedal and a brake pedal respectively). However, the maneuvering system 528 may be communicatively connected to the ADS 510 of the vehicle, to receive instructions on how the various modules should act. Thus, the ADS 510 can control the maneuvering of the vehicle 500.

As stated above, the vehicle 500 comprises an ADS 510. The ADS 510 may be part of the control system 502 of the vehicle. The ADS 510 is configured to carry out the functions and operations of the automated functions of the vehicle 500. The ADS 510 can comprise a number of modules, where each module is tasked with different functions of the ADS 510.

The ADS 510 may comprise a localization module 512 or localization block/system. The localization module 512 is configured to determine and/or monitor a geographical position and heading of the vehicle 500, and may utilize data from the sensor system 520, such as data from the GNSS module 522. Alternatively, or in combination, the localization module 512 may utilize data from the one or more sensors 524. The localization system may alternatively be realized as a Real Time Kinematics (RTK) GPS in order to improve accuracy.

The ADS 510 may further comprise a perception module 514 or perception block/system. The perception module 514 may refer to any commonly known module and/or functionality, e.g. comprised in one or more electronic control modules and/or nodes of the vehicle 500, adapted and/or configured to interpret sensory data - relevant for driving of the vehicle 500 - to identify e.g. obstacles, vehicle lanes, relevant signage, appropriate navigation paths etc. The perception module 514 may thus be adapted to rely on and obtain inputs from multiple data sources, such as automotive imaging, image processing, computer vision, and/or in-car networking, etc., in combination with sensory data e.g. from the sensor system 520.

The localization module 512 and/or the perception module 514 may be communicatively connected to the sensor system 520 in order to receive sensor data from the sensor system 520. The localization module 512 and/or the perception module 514 may further transmit control instructions to the sensor system 520.

The ADS may further comprise a path planning module 516. The path planning module 516 is configured to determine a planned path of the vehicle 500 based on a perception and location of the vehicle as determined by the perception module 514 and the localization module 512 respectively. A planned path determined by the path planning module 516 may be sent to the maneuvering system 528 for execution.

The ADS may further comprise a decision and control module 518. The decision and control module 518 is configured to perform the control and make decisions of the ADS 510. For example, the decision and control module 518 may decide on whether the planned path determined by the path-planning module 516 should be executed or not.

It should be understood that parts of the described solution may be implemented either in the vehicle 500, in a server located external to the vehicle, or in a combination of internal and external to the vehicle; for instance, in a server in communication with the vehicle, a so-called cloud solution, as explained below, e.g. in connection with Fig. 6. The different features and steps of the embodiments may be combined in other combinations than those described. Further, the elements of the vehicle 500 (i.e. the systems and modules) may be implemented in different combinations than those described herein.

Figure 6 illustrates, by way of example, a system 600 according to some embodiments. More specifically, a system 600 being configured to implement the principles of the presently disclosed technology. The system 600 should therefore be seen as a non-limiting example of a realization of the herein disclosed aspects of the present technology. For instance, the system 600 may be configured to perform the method 100 described in connection with Fig. 1, as well as the method 300 described above in connection with Fig. 3. Thus, any features or principles described above are applicable also to the system 600 as described herein, and vice versa.

The system 600 comprises a server 602 (or remote, cloud, central, back-office, fleet, or back-end server), referred to in the following as the remote server 602 or just server 602. As illustrated, the server 602 may be provided in the cloud, i.e. as a cloud-implemented server. Advantageously, the server 602 may perform more computational heavy tasks, or manage and coordinate the fleet of vehicles (further described below), such as aggregating data from, or distributing data to, the different vehicles of the fleet, updating ADS functions and distributing the updates to the fleet, etc. In particular, the server 602 may be configured to perform the steps of the method 300 described above in connection with Fig. 3.

The system 600 further comprises one or more vehicles 604a-c, also referred to as a fleet of vehicles 604a-c. The one or more vehicles 604a-c may be vehicles 500 as described above in connection with Fig. 5. The one or more vehicles 604a-c may thus be configured to perform the method 100 described above in connection with Fig. 1. The fleet illustrated in Fig. 6 comprises three vehicles, a first, second and third vehicle 604a-c, by way of example. The system 600 may however comprise any number of vehicles 604a-c. In the following, reference will mainly be made to the first vehicle 604a, however the same aspects apply also to the other vehicles of the fleet of vehicles.

The one or more vehicles 604a-c are communicatively connected to the remote server 602. This may provide for transmitting and/or receiving data 606 between the vehicles and the server. The one or more vehicles 604a-c may be further communicatively connected to each other. The data 606 may be any kind of data, such as communication signals, instructions, evaluation data, etc. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area Network (WLAN) (e.g. IEEE 802.11) based solutions. The sever 602 comprises a suitable memory and control circuitry, for example, one or more processors or processing circuitry, as well as one or more other components such as a data interface and transceiver. The server 602 may also include software modules or other components, such that the control circuity can be configured to execute machine-readable instructions loaded from memory to implement the steps of the method to be performed.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media—e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the invention may be at least in part implemented by means of both hardware and software, and that several "means" or "units" may be represented by the same item of hardware.

## Claims

1. A computer-implemented method (100) for evaluating a candidate automated driving (AD) feature for a vehicle during a defined driving scenario, while the vehicle operates under a supervised operation mode, wherein the driving scenario is defined at least by a specific route, the method (100) comprising:
obtaining (S102) driving preferences associated with the driver, the driving preferences being indicative of a desired performance level of the vehicle during said driving scenario;
obtaining (S104) an expected performance level of the candidate AD feature during said driving scenario, wherein the candidate AD feature is capable of operating on a higher autonomy level than the supervised operation mode;
in response to the expected performance level meeting the desired performance level:
activating (S106) the candidate AD feature under the supervised operation mode; and
collecting (S108) evaluation data indicative of a performance of said candidate AD feature, while the vehicle is operated with the candidate AD feature under the supervised operation mode during the driving scenario.

2. The method (100) according to claim 1, wherein the expected performance level is defined by a maximum speed that the candidate AD feature can achieve during said driving scenario.

3. The method (100) according to claim 1 or 2, wherein the desired performance level is defined by a lowest speed accepted by the driver.

4. The method (100) according to claim 1 or 2, wherein the desired performance level comprises a current performance level of the supervised operation mode during said driving scenario, and a driver specific range being indicative of an acceptable deviation from the current performance level.

5. The method (100) according to claim 4, wherein the expected performance level meets the desired performance level if the expected performance level is within the driver specific range from the current performance level.

6. The method (100) according to claim 4 or 5, wherein the current performance level is defined by a current speed of the vehicle driven under the supervised operation mode.

7. The method (100) according to any one of the claims 1 to 6, wherein the driving scenario is further defined by one or more of a geographical area, a time-of-day, a day-of-the-week, a vehicle state, and a set of environmental conditions pertaining to a driving environment of the vehicle.

8. The method (100) according to claim 7, wherein the environmental conditions are one or more of weather conditions, ambient light conditions, traffic conditions, and road surface conditions.

9. The method (100) according to any one of the claims 1 to 8, wherein the driver preferences are determined from historical data of how the driver has previously driven under the supervised operation mode during said driving scenario.

10. The method (100) according to any one of the claims 1 to 9, further comprising adjusting one or more operational characteristics of the supervised operation mode in view of one or more operational characteristics of the candidate AD feature, thereby obtaining an updated supervised operation mode, and
wherein the obtained driving preferences are indicative of a desired performance level of the vehicle during said driving scenario, while operating under the updated supervised operation mode.

11. A computer program product comprising instructions which, when the program is executed by a computer, causes the computer to carry out the method (100) according to any one of claims 1 to 10.

12. A computing device (200) for evaluating a candidate automated driving (AD) feature for a vehicle during a defined driving scenario, while the vehicle operates under a supervised operation mode, wherein the driving scenario is defined at least by a specific route, the computing device (200) comprising control circuitry (202) configured to:
obtain driving preferences associated with the driver, the driving preferences being indicative of a desired performance level of the vehicle during said driving scenario;
obtain an expected performance level of the candidate AD feature during said driving scenario, wherein the candidate AD feature is capable of operating on a higher autonomy level than the supervised operation mode;
in response to the expected performance level meeting the desired performance level:
activate the candidate AD feature under the supervised operation mode; and
collect evaluation data indicative of a performance of said candidate AD feature, while the vehicle is operated with the candidate AD feature under the supervised operation mode during the driving scenario.

13. A computer-implemented method (300) for collecting evaluation data indicative of a performance of a candidate automated driving (AD) feature for a vehicle during a defined driving scenario, while the vehicle operates under a supervised operation mode, wherein the driving scenario is defined at least by a specific route, the method (300) comprising:
obtaining (S302), from each vehicle of a plurality of vehicles, driving preferences associated with a driver of said vehicle, the driving preferences being indicative of a desired performance level of said vehicle during said driving scenario;
obtaining (S304) an expected performance level of the candidate AD feature during said driving scenario, wherein the candidate AD feature is capable of operating on a higher autonomy level than the supervised operation mode;
in response to the expected performance level failing to meet the desired performance level of each of the plurality of vehicles during the driving scenario, dividing (S306) the driving scenario into a plurality of sub-scenarios;
identifying (S308) two or more vehicles of the plurality of vehicles for which the expected performance level meets the desired performance level along a respective sub-scenario;
sending (S310) instructions, to the two or more vehicles, to operate with the candidate AD feature under the supervised operation mode along the respective sub-scenario;
collecting (S312) evaluation data indicative of a performance of said candidate AD feature, while the two or more vehicles operates with the candidate AD feature under the supervised operation mode along the respective sub-scenario; and
aggregating (S314) the evaluation data of each sub-scenario to obtain evaluation data over the driving scenario.

14. A computer program product comprising instructions which, when the program is executed by a computer, causes the computer to carry out the method (300) according to claim 13.

15. A computing device (400) for collecting evaluation data indicative of a performance of a candidate automated driving (AD) feature for a vehicle during a defined driving scenario, while the vehicle operates under a supervised operation mode, wherein the driving scenario is defined at least by a specific route, the computing device (400) comprising control circuitry (402) configured to:
obtain, from each vehicle of a plurality of vehicles, driving preferences associated with a driver of said vehicle, the driving preferences being indicative of a desired performance level of said vehicle during said driving scenario;
obtain an expected performance level of the candidate AD feature during said driving scenario, wherein the candidate AD feature is capable of operating on a higher autonomy level than the supervised operation mode;
in response to the expected performance level failing to meet the desired performance level of each of the plurality of vehicles during the driving scenario, divide the driving scenario into a plurality of sub-scenarios;
identify two or more vehicles of the plurality of vehicles for which the expected performance level meets the desired performance level along a respective sub-scenario;
send instructions, to the two or more vehicles, to operate with the candidate AD feature under the supervised operation mode along the respective sub-scenario;
collect evaluation data indicative of a performance of said candidate AD feature, while the two or more vehicles operates with the candidate AD feature under the supervised operation mode along the respective sub-scenario; and
aggregate the evaluation data of each sub-scenario to obtain evaluation data over the driving scenario.
